# EUROPEAN PATENT APPLICATION

(11) **EP 4 480 668 A1**
(43) Date of publication of application: **25.12.2024**
(21) Application number: 22926020.3
(22) Date of filing: 29.08.2022
(51) Int. Cl.: B29C 48/74, B29C 48/50, B29C 48/685

(54) **EXTRUSION APPARATUS AND METHOD FOR PRODUCING RESIN COMPOSITION**

(30) Priority: 14.02.2022 JP 2022020225
(71) Applicant: The Japan Steel Works, Ltd., Tokyo 141-0032 (JP)
(72) Inventor: TOMIYAMA Hideki, Tokyo 141-0032 (JP); FUKUZAWA Yohei, Tokyo 141-0032 (JP); SAWADA Tomoki, Tokyo 141-0032 (JP)
(74) Representative: Simmons & Simmons LLP (Munich)
(86) International application number: PCT/JP2022/032355
(87) International publication number: WO 2023/153003

(57) **Abstract**

The purpose of the present invention is to provide an extrusion apparatus which can impart a stretching activity to a resin raw material while preventing the clogging of the resin raw material. The extrusion apparatus (1) according to one embodiment of the present disclosure is provided with: a cylinder (2) into which a resin raw material is supplied from a hopper (3); a discharge section (4) which is arranged at an end part of the cylinder (2) and from which the kneaded resin raw material is discharged; a screw (5) which is rotatably inserted into the cylinder (2), kneads the resin raw material, and conveys the resin raw material to the discharge section (4) side; a partitioning section (6) which is arranged between the cylinder (2) and the screw (5) and has, formed therein, a penetration part (61) through which the resin raw material passes; a first passage which is formed between the screw (5) and the partitioning section (6) and through which the resin raw material passes; and a second flow passage which is formed between the cylinder (2) and the partitioning section (6) and through which the resin raw material passes.

## Description

### Technical Field

The present disclosure relates to an extrusion apparatus and a method for producing a resin composition.

### Background Art

In order to enhance kneading performance of a resin raw material, an extrusion apparatus has a configuration in which not only a shearing activity but also a stretching activity is imparted to the resin raw material. For example, each of extrusion apparatuses of Patent Literatures 1 and 2 has a configuration in which a resin raw material to which a shearing activity is imparted by a screw in a conveying portion, the conveying portion being demarcated by a partition wall portion formed in the screw, flows into a passage formed in the screw so as to connect together neighboring conveying portions, the passage extends in an axis direction of the screw, and is rapidly wrung and a stretching activity is thereby imparted to the resin raw material.

### Citation List

### Patent Literature

Patent Literature 1: Japanese Unexamined Patent Application Publication No. 2015-227053
Patent Literature 2: Japanese Unexamined Patent Application Publication No. 2016-203576

### Summary of Invention

### Technical Problem

The present applicants found the following problem. Each of extrusion apparatuses of Patent Literatures 1 and 2 can impart not only a shearing activity but also a stretching activity to a resin raw material, but there is a possibility that an inside of a passage is clogged with the resin raw material.

The present disclosure has been made in consideration of such a problem and realizes an extrusion apparatus and a method for producing a resin composition that can impart a stretching activity to a resin raw material while inhibiting clogging with the resin raw material.

### Solution to Problem

An extrusion apparatus according to one aspect of the present disclosure includes:
a cylinder to which a resin raw material is supplied from a hopper;
a discharge portion which is provided in an end portion of the cylinder and discharges the resin raw material which has been kneaded;
a screw which is rotatably inserted in an internal portion of the cylinder, kneads the resin raw material, and conveys the resin raw material to a side of the discharge portion;
a partitioning portion which is arranged between the cylinder and the screw and in which a through portion through which the resin raw material goes is formed;
a first flow passage which is formed between the screw and the partitioning portion and through which the resin raw material goes; and
a second flow passage which is formed between the cylinder and the partitioning portion and through which the resin raw material goes.

A method for producing a resin composition according to one aspect of the present disclosure includes:
a step of conveying a resin raw material, which is supplied to an internal portion of a cylinder, to a side of a discharge portion by a screw;
a step of causing the resin raw material to enter a first flow passage, which is formed between the screw and a partitioning portion, via a through portion of the partitioning portion, which is arranged between the cylinder and the screw, and of causing the resin raw material to flow in the first flow passage; and
a step of causing the resin raw material to enter a second flow passage, which is formed between the cylinder and the partitioning portion, via the through portion of the partitioning portion and of causing the resin raw material to flow in the second flow passage, and
the resin raw material is accelerated when the resin raw material goes through the through portion of the partitioning portion.

### Advantageous Effects of Invention

The present disclosure can realize an extrusion apparatus and a method for producing a resin composition that are capable of imparting a stretching activity to a resin raw material while inhibiting clogging with the resin raw material.

### Brief Description of Drawings

Fig. 1 is a partial cross-sectional view illustrating an extrusion apparatus of an embodiment;
Fig. 2 is a partial cross-sectional view illustrating a side of a discharge portion in the extrusion apparatus of the embodiment while enlarging the side of the discharge portion;
Fig. 3 is a cross-sectional view illustrating a first portion and a third portion of a cylinder in the extrusion apparatus of the embodiment;
Fig. 4 is a perspective view illustrating a screw in the extrusion apparatus of the embodiment;
Fig. 5 is a perspective view illustrating a partitioning portion in the extrusion apparatus of the embodiment;
Fig. 6 is a diagram for explaining a flow of a resin raw material in a portion on a Y-axis positive side in the cylinder in the extrusion apparatus of the embodiment;
Fig. 7 is a diagram illustrating a dispersion test result of a composite material which was obtained by kneading the resin raw material by using a common two-axis extrusion apparatus;
Fig. 8 is an enlarged view of an VIII section in Fig. 7;
Fig. 9 is a diagram illustrating a dispersion test result of a composite material which was obtained by kneading the resin raw material by using the extrusion apparatus of the embodiment;
Fig. 10 is an enlarged view of an X section in Fig. 9;
Fig. 11 is a diagram illustrating tensile elastic moduli of a test specimen, which was shaped from the composite material obtained by kneading the resin raw material by using the common two-axis extrusion apparatus, and a test specimen, which was shaped from the resin raw material kneaded by using the extrusion apparatus of the present embodiment; and
Fig. 12 is a diagram illustrating bending elastic moduli of the test specimen, which was shaped from the resin raw material kneaded by using the common two-axis extrusion apparatus, and the test specimen, which was shaped from the resin raw material kneaded by using the extrusion apparatus of the present embodiment.

### Description of Embodiments

A specific embodiment to which the present disclosure is applied will hereinafter be described in detail with reference to drawings. However, the present disclosure is not limited by the following embodiment. Further, the following descriptions and drawings are appropriately simplified for the purpose of clarifying the descriptions.

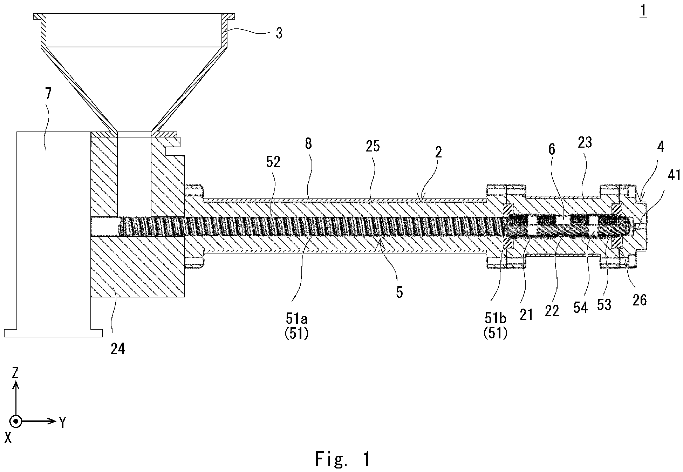

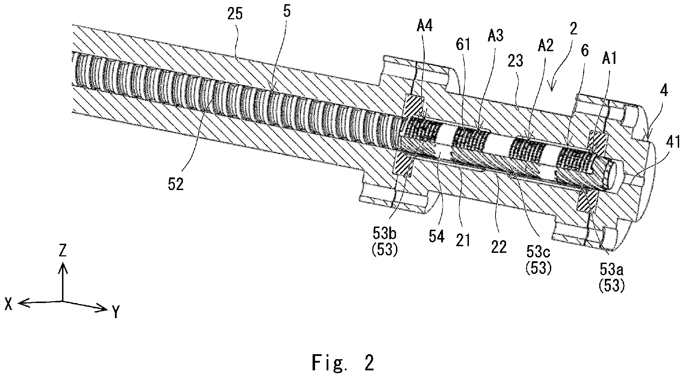

First, a configuration of an extrusion apparatus of the present embodiment will be described. Fig. 1 is a partial cross-sectional view illustrating the extrusion apparatus of the present embodiment. Fig. 2 is a partial cross-sectional view illustrating a side of a discharge portion in the extrusion apparatus of the present embodiment while enlarging the side of the discharge portion.

Note that in the following description, in order to make clear the description, the description will be made by using a three-dimensional (XYZ) coordinate system. Here, there are cases where a "resin raw material" in the following description is used as a generic term which includes not only a state where the resin raw material is not yet melted but also a state where that is melted.

An extrusion apparatus 1 of the present embodiment is suitable for forming a composite material (that is, a resin composition such as a resin strand, a resin pellet, or a resin film) that is used in, for example, an injection molding machine, an extrusion molding machine, or the like which kneads and extrudes the resin raw material. As illustrated in Fig. 1 and Fig. 2, the extrusion apparatus 1 includes a cylinder 2, a hopper 3, a discharge portion 4, a screw 5, a partitioning portion 6, a driving portion 7, and a heating portion 8.

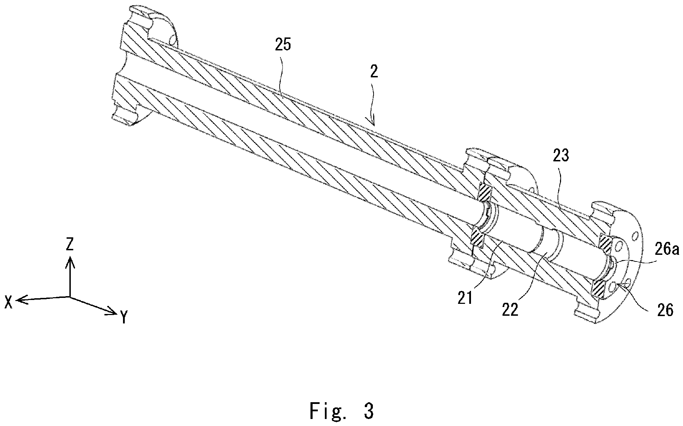

Fig. 3 is a cross-sectional view illustrating a first portion and a third portion of the cylinder in the extrusion apparatus of the present embodiment. For example, as illustrated in Fig. 1 to Fig. 3, the cylinder 2 has a generally cylindrical shape and extends in a Y-axis direction. In an inner peripheral surface of a portion in the cylinder 2 on a Y-axis positive side, cavity portions 21 and a partition wall portion (second partition wall portion) 22 are formed.

For example, as illustrated in Fig. 1 to Fig. 3, the cavity portion 21 is a cylindrical recess portion, which has a large outer diameter compared to a diameter of the partition wall portion 22, and extends in the Y-axis direction. The cavity portions 21 are arranged at an interval in the Y-axis direction, for example.

As illustrated in Fig. 1 to Fig. 3, the partition wall portion 22 is arranged between the cavity portions 21 in the Y-axis direction. For example, the partition wall portion 22 is a cylindrical protrusion portion, which has an inner diameter generally equivalent to an outer diameter of a partitioning portion 6 whose details will be described later, and extends in the Y-axis direction.

For example, as illustrated in Fig. 1, such a cylinder 2 is configured as division structures that are a first portion 23 in which the cavity portions 21 and the partition wall portion 22 are formed, a second portion 24 in which the hopper 3 is provided, and a third portion 25 as another portion.

Incidentally, those first portion 23, second portion 24, and third portion 25 can be connected together by using bolts or the like which are caused to pass through through holes of a flange formed in each of those portions, for example. However, the number of divisions of the cylinder 2 is not limited and can appropriately be changed in accordance with a length of the cylinder 2 in the Y-axis direction, a shape of the screw 5, or the like.

The hopper 3 supplies the resin raw material to an internal portion of the cylinder 2. As illustrated in Fig. 1, the hopper 3 is provided in the second portion 24 of the cylinder 2. Here, a plurality of kinds of resin raw materials are accommodated in the hopper 3.

The discharge portion 4 discharges the resin raw material which has been kneaded. As illustrated in Fig. 1 and Fig. 2, the discharge portion 4 is provided in an end portion of the cylinder 2 on the Y-axis positive side and includes a discharge opening 41 which passes through the discharge portion 4 in the Y-axis direction.

As illustrated in Fig. 1, the screw 5 extends in the Y-axis direction and includes a helical flight 51. The screw 5 is connected with the driving portion 7 and goes through the internal portion of the cylinder 2, and an end portion of the screw 5 on a Y-axis negative side protrudes from an end portion of the cylinder 2 on the Y-axis negative side.

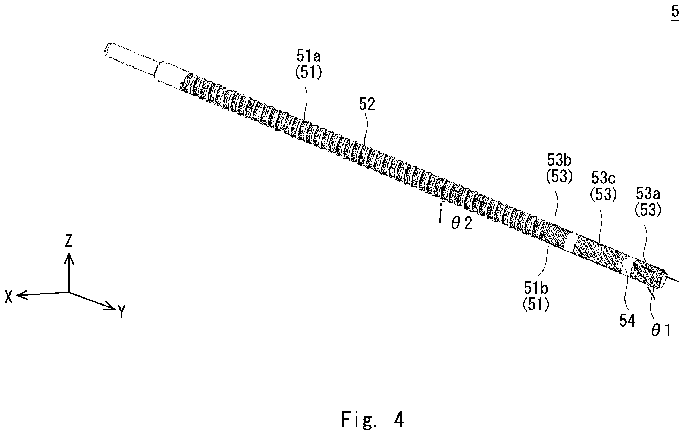

Fig. 4 is a perspective view illustrating the screw in the extrusion apparatus of the present embodiment. As illustrated in Fig. 4, the screw 5 includes a conveying portion 52, a kneading portion 53, and partition wall portions (first partition wall portions) 54. The conveying portion 52 conveys the resin raw material to the Y-axis positive side while plasticizing the resin raw material.

For example, as illustrated in Fig. 1, the conveying portion 52 is arranged in internal portions of the second portion 24 and the third portion 25 of the cylinder 2. A diameter of the conveying portion 52 (that is, a diameter of an outer peripheral end of a flight 51a of the conveying portion 52) is generally equivalent to inner diameters of the second portion 24 and the third portion 25 of the cylinder 2, for example.

The kneading portion 53 kneads the resin raw material and conveys that to the Y-axis positive side. As illustrated in Fig. 1, the kneading portion 53 is arranged on the Y-axis positive side relative to the conveying portion 52 and is arranged in an internal portion of the first portion 23 of the cylinder 2, for example. A diameter of the kneading portion 53 (that is, a diameter of an outer peripheral end of a flight 51b of the kneading portion 53) is generally equivalent to an inner diameter of the partitioning portion 6, whose details will be described later, for example.

For example, as illustrated in Fig. 4, the kneading portion 53 is arranged at intervals in the Y-axis direction and includes a first portion 53a on the Y-axis positive side, a second portion 53b on the Y-axis negative side, and a third portion 53c between the first portion 53a and the second portion 53b.

In this case, as illustrated in Fig. 2, the first portion 53a is arranged in a portion, on the Y-axis positive side, of the first portion 23 of the cylinder 2. The second portion 53b is arranged in a portion, on the Y-axis negative side, of the first portion 23 of the cylinder 2. The third portion 53c is arranged across the partition wall portion 22 of the cylinder 2 at a general center, in the Y-axis direction, in the first portion 23 of the cylinder 2.

For example, as illustrated in Fig. 2 and Fig. 4, the partition wall portions 54 are arranged between the first portion 53a and the third portion 53c of the kneading portion 53 and between the third portion 53c and the second portion 53b of the kneading portion 53. The partition wall portion 54 is a cylindrical protrusion portion, which has a diameter generally equivalent to the inner diameter of the partitioning portion 6 whose details will be described later.

In this case, as illustrated in Fig. 2, the partition wall portion 54 on the Y-axis positive side is arranged at a general center, in the Y-axis direction, in the cavity portion 21 of the cylinder 2 on the Y-axis positive side, and the partition wall portion 54 on the Y-axis negative side is arranged at a general center, in the Y-axis direction, in the cavity portion 21 of the cylinder 2 on the Y-axis negative side.

Thus, as illustrated in Fig. 2, at least a portion, on the Y-axis negative side, of the first portion 53a of the kneading portion 53 is arranged to be covered by a portion, on the Y-axis positive side, of the cavity portion 21 of the cylinder 2 on the Y-axis positive side, and a portion, on the Y-axis positive side, of the third portion 53c of the kneading portion 53 is arranged to be covered by a portion, on the Y-axis negative side, of the cavity portion 21 of the cylinder 2 on the Y-axis positive side.

Further, as illustrated in Fig. 2, at least a portion, on the Y-axis positive side, of the second portion 53b of the kneading portion 53 is arranged to be covered by a portion, on the Y-axis negative side, of the cavity portion 21 of the cylinder 2 on the Y-axis negative side, and a portion, on the Y-axis negative side, of the third portion 53c of the kneading portion 53 is arranged to be covered by a portion, on the Y-axis positive side, of the cavity portion 21 of the cylinder 2 on the Y-axis negative side.

Here, although a detailed mechanism will be described later, as illustrated in Fig. 4, it is preferable that a flight angle θ1 of the flight 51b of the kneading portion 53 be small relatively to a flight angle θ2 of the flight 51a of the conveying portion 52.

Further, it is preferable that the second portion 53b be formed such that a depth of a groove portion of a portion, on the Y-axis positive side, of the second portion 53b of the kneading portion 53 becomes shallower toward the partition wall portion 54 on the Y-axis negative side and that the third portion 53c be formed such that a depth of a groove portion of a portion, on the Y-axis positive side, of the third portion 53c of the kneading portion 53 becomes shallower toward the partition wall portion 54 on the Y-axis positive side.

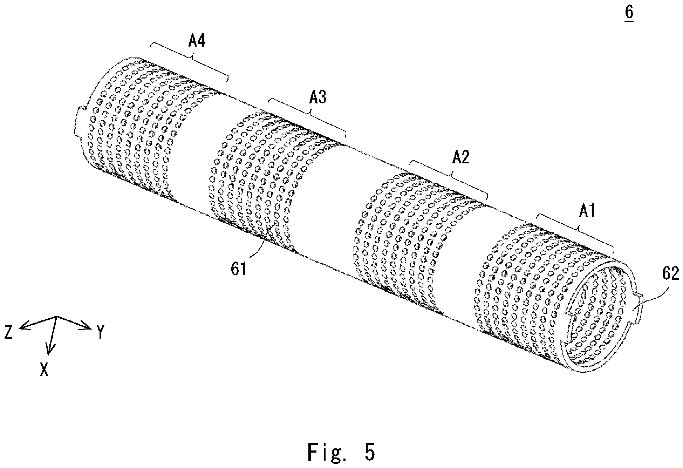

For example, as illustrated in Fig. 1 and Fig. 2, the partitioning portion 6 is arranged between an inner peripheral surface of the first portion 23 of the cylinder 2 and outer peripheral ends of the kneading portion 53 and the partition wall portions 54 of the screw 5. Fig. 5 is a perspective view illustrating the partitioning portion in the extrusion apparatus of the present embodiment.

As illustrated in Fig. 5, the partitioning portion 6 has a generally cylindrical shape, and a plurality of through portions 61 are formed in the partitioning portion 6. The outer diameter of the partitioning portion 6 is generally equivalent to the diameter of the partition wall portion 22 of the cylinder 2, and the inner diameter of the partitioning portion 6 is generally equivalent to the diameters of the kneading portion 53 and the partition wall portions 54 of the screw 5.

For example, as illustrated in Fig. 5, the through portion 61 is a circular hole which passes through the partitioning portion 6 in a thickness direction of the partitioning portion 6. The plurality of through portions 61 are respectively formed in a plurality of regions which are arranged at intervals in the Y-axis direction in the partitioning portion 6. For example, the through portions 61 are formed in a first region A1, a second region A2, a third region A3, and a fourth region A4 of the partitioning portion 6.

As illustrated in Fig. 2, the first region A1 is a region that covers a portion which is covered by a portion, on the Y-axis positive side, of the cavity portion 21 of the cylinder 2 on the Y-axis positive side in the first portion 53a of the kneading portion 53 of the screw 5. The second region A2 is a region that covers a portion which is covered by a portion, on the Y-axis negative side, of the cavity portion 21 of the cylinder 2 on the Y-axis positive side in the third portion 53c of the kneading portion 53 of the screw 5.

As illustrated in Fig. 2, the third region A3 is a region that covers a portion which is covered by a portion, on the Y-axis positive side, of the cavity portion 21 of the cylinder 2 on the Y-axis negative side in the third portion 53c of the kneading portion 53 of the screw 5. The fourth region A4 is a region that covers a portion which is covered by a portion, on the Y-axis negative side, of the cavity portion 21 of the cylinder 2 on the Y-axis negative side in the second portion 53b of the kneading portion 53 of the screw 5.

Thus, for example, as illustrated in Fig. 5, no through portion 61 is formed in regions in the partitioning portion 6 which correspond to the partition wall portions 54 of the screw 5, that is, a region between the first region A1 and the second region A2 and a region between the third region A3 and the fourth region A4. Further, no through portion 61 is formed in a region in the partitioning portion 6 which corresponds to the partition wall portion 22 of the cylinder 2, that is, a region between the second region A2 and the third region A3.

Note that a ratio (extent) of the through portions 61 for a unit area in the first region A1, the second region A2, the third region A3, and the fourth region A4 can be set taking into consideration a stretching activity to be imparted to the resin raw material, flowability of the resin raw material, and so forth.

Here, in order that the partitioning portion 6 can be inserted into the internal portion of the first portion 23 of the cylinder 2 in the Y-axis direction, as illustrated in Fig. 2 and Fig. 3, it is preferable that the cylinder 2 include annular lid portions 26, which are detachable, in the end portion on the Y-axis positive side and the end portion on the Y-axis negative side of the cylinder 2.

In this case, as illustrated in Fig. 3, it is preferable that an end portion, on the Y-axis positive side, of the cavity portion 21 of the cylinder 2 on the Y-axis positive side (that is, a side wall portion, on the Y-axis positive side, of the cavity portion 21 on the Y-axis positive side) be formed by an end portion, around the through portions on the Y-axis negative side, of the lid portion 26 on the Y-axis positive side.

Further, as illustrated in Fig. 3, it is preferable that an end portion, on the Y-axis negative side, of the cavity portion 21 of the cylinder 2 on the Y-axis negative side (that is, a side wall portion, on the Y-axis negative side, of the cavity portion 21 on the Y-axis negative side) be formed by an end portion, around the through portions on the Y-axis positive side, of the lid portion 26 on the Y-axis negative side.

In addition, it is preferable that the partitioning portion 6 be fixed to the cylinder 2. For example, it is preferable that an engaging portion 62, in a projecting shape, of the partitioning portion 6, the engaging portion 62 protruding in the Y-axis direction, be engaged with an engaged portion 26a in a recessed shape which is formed in the lid portion 26 of the cylinder 2 and rotation around the Y axis be thereby restrained.

The driving portion 7 rotates and drives the screw 5. As illustrated in Fig. 1, the driving portion 7 is connected with the end portion of the screw 5 on the Y-axis negative side such that a driving force is capable of being transmitted. The heating portion 8 heats the resin raw material supplied to the internal portion of the cylinder 2 and thereby melts the resin raw material. The heating portion 8 can be configured with a sheet heater, for example, and is wound around an outer peripheral surface of the cylinder 2.

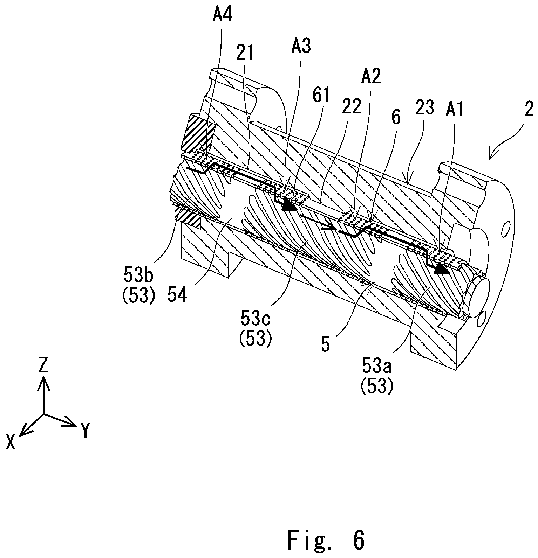

Next, a description will be made about a flow of the resin raw material in producing a composite material by using the extrusion apparatus 1 of the present embodiment. Fig. 6 is a diagram for explaining the flow of the resin raw material in a portion on the Y-axis positive side in the cylinder in the extrusion apparatus of the present embodiment. Note that in Fig. 6, the flow of the resin raw material is indicated by arrows.

First, the resin raw material supplied from the hopper 3 to the cylinder 2 is plasticized while being conveyed to the Y-axis positive side by the conveying portion 52 of the screw 5 and is melted by being heated by the heating portion 8.

When a melted resin enters a gap (that is, the groove portion of the second portion 53b of the kneading portion 53 of the screw 5) between the second portion 53b of the kneading portion 53 of the screw 5 and the partitioning portion 6 by being pushed by a following melted resin and reaches the vicinity of the partition wall portion 54 of the screw 5 on the Y-axis negative side, the flow of the melted resin to the Y-axis positive side is dammed by the partition wall portion 54 of the screw 5 on the Y-axis negative side and is thereby decelerated. In this case, the gap between the second portion 53b of the kneading portion 53 of the screw 5 and the partitioning portion 6 forms a flow passage (first flow passage) through which the melted resin goes.

The melted resin goes through the through portions 61 formed in the fourth region A4 of the partitioning portion 6 by being pushed by the following melted resin and by rotation of the kneading portion 53 of the screw 5 and enters the cavity portion 21 of the cylinder 2 on the Y-axis negative side. Accordingly, the melted resin is rapidly accelerated when the melted resin flows into the through portions 61 of the partitioning portion 6 because a flow passage cross-sectional area rapidly shrinks. Further, the melted resin is rapidly decelerated when the melted resin flows out from the through portions 61 of the partitioning portion 6 because the flow passage cross-sectional area is rapidly enlarged. As a result, the stretching activity is imparted to the melted resin.

In this case, the partition wall portion 54 of the screw 5 on the Y-axis negative side functions as a guiding portion (first guiding portion) which guides the melted resin from the gap between the second portion 53b of the kneading portion 53 of the screw 5 and the partitioning portion 6 to the through portions 61 formed in the fourth region A4 of the partitioning portion 6.

Further, the through portion 61 formed in the fourth region A4 of the partitioning portion 6 functions as a flow-out hole which causes the melted resin to flow out from the gap between the second portion 53b of the kneading portion 53 of the screw 5 and the partitioning portion 6 to the cavity portion 21 of the cylinder 2 on the Y-axis negative side.

Here, because the second portion 53b is formed such that the groove portion of the second portion 53b of the kneading portion 53 of the screw 5 becomes shallower toward the partition wall portion 54 on the Y-axis negative side, the melted resin can satisfactorily be guided to the through portions 61 formed in the fourth region A4 of the partitioning portion 6.

When the melted resin flows to the Y-axis positive side in the cavity portion 21 of the cylinder 2 on the Y-axis negative side by being pushed by the following melted resin, the flow of the melted resin to the Y-axis positive side is dammed by the partition wall portion 22 of the cylinder 2 and is thereby decelerated. In this case, the cavity portion 21 of the cylinder 2 on the Y-axis negative side, the cavity portion 21 being a gap between the cylinder 2 and the partitioning portion 6, forms a flow passage (second flow passage) through which the melted resin goes.

Here, in a case where the flight angle θ1 of the flight 51b of the kneading portion 53 of the screw 5 is small relatively to the flight angle θ2 of the flight 51a of the conveying portion 52 of the screw 5, while a conveying force to the Y-axis positive side in the kneading portion 53 is weakened compared to that in the conveying portion 52 of the screw 5, a flow of the melted resin to an X-axis positive side and a Z-axis positive side can be promoted.

Thus, the melted resin is pressurized and can thereby strongly be pushed into the cavity portion 21 of the cylinder 2. Accordingly, the through portions 61 of the partitioning portion 6 and the cavity portion 21 of the cylinder 2 can be inhibited from being clogged with the melted resin.

The melted resin goes through the through portions 61 formed in the third region A3 of the partitioning portion 6 by being pushed by the following melted resin and enters a gap (that is, the groove portion of the third portion 53c of the kneading portion 53 of the screw 5) between a portion, on the Y-axis negative side, of the third portion 53c of the kneading portion 53 of the screw 5 and the partitioning portion 6. Accordingly, the melted resin is rapidly accelerated when the melted resin flows into the through portions 61 of the partitioning portion 6 because the flow passage cross-sectional area rapidly shrinks. Further, the melted resin is rapidly decelerated when the melted resin flows out from the through portions 61 of the partitioning portion 6 because the flow passage cross-sectional area is rapidly enlarged. As a result, the stretching activity is imparted to the melted resin.

In this case, the partition wall portion 22 of the cylinder 2 functions as a guiding portion (second guiding portion) which guides the melted resin from the cavity portion 21 of the cylinder 2 on the Y-axis negative side to the through portions 61 formed in the third region A3 of the partitioning portion 6.

Further, the through portion 61 formed in the third region A3 of the partitioning portion 6 functions as a flow-in hole which causes the melted resin to flow from the cavity portion 21 of the cylinder 2 on the Y-axis negative side into a gap between the third portion 53c of the kneading portion 53 of the screw 5 and the partitioning portion 6.

The melted resin is kneaded while being conveyed to the Y-axis positive side by the third portion 53c of the kneading portion 53 of the screw 5. Accordingly, a sheering activity is imparted to the melted resin. In this case, the gap between the third portion 53c of the kneading portion 53 of the screw 5 and the partitioning portion 6 forms the flow passage (first flow passage) through which the melted resin goes.

When the melted resin flows to the Y-axis positive side by being pushed by the following melted resin, the flow of the melted resin to the Y-axis positive side is dammed by the partition wall portion 54 of the screw 5 on the Y-axis positive side and is thereby decelerated. The melted resin goes through the through portions 61 formed in the second region A2 of the partitioning portion 6 by being pushed by the following melted resin and enters the cavity portion 21 of the cylinder 2 on the Y-axis positive side. Accordingly, the melted resin is rapidly accelerated when the melted resin flows into the through portions 61 of the partitioning portion 6 because the flow passage cross-sectional area rapidly shrinks. Further, the melted resin is rapidly decelerated when the melted resin flows out from the through portions 61 of the partitioning portion 6 because the flow passage cross-sectional area is rapidly enlarged. As a result, the stretching activity is imparted to the melted resin.

In this case, the partition wall portion 54 of the screw 5 on the Y-axis positive side functions as the guiding portion (first guiding portion) which guides the melted resin from the gap between the third portion 53c of the kneading portion 53 of the screw 5 and the partitioning portion 6 to the through portions 61 formed in the second region A2 of the partitioning portion 6.

Further, the through portion 61 formed in the second region A2 of the partitioning portion 6 functions as a flow-out hole which causes the melted resin to flow out from the gap between the third portion 53c of the kneading portion 53 of the screw 5 and the partitioning portion 6 to the cavity portion 21 of the cylinder 2 on the Y-axis positive side.

Here, because the third portion 53c is formed such that the groove portion of the third portion 53c of the kneading portion 53 of the screw 5 becomes shallower toward the partition wall portion 54 on the Y-axis positive side, the melted resin can satisfactorily be guided to the through portions 61 formed in the second region A2 of the partitioning portion 6.

When the melted resin flows to the Y-axis positive side in the cavity portion 21 of the cylinder 2 on the Y-axis positive side by being pushed by the following melted resin, the flow of the melted resin to the Y-axis positive side is dammed by the end portion, on the Y-axis positive side, of the cavity portion 21 of the cylinder 2 on the Y-axis positive side and is thereby decelerated.

In this case, the cavity portion 21 of the cylinder 2 on the Y-axis positive side, the cavity portion 21 being a gap between the cylinder 2 and the partitioning portion 6, forms the flow passage (second flow passage) through which the melted resin goes. Thus, in the present embodiment, the second flow passage is divided by the partition wall portion 22 of the cylinder 2.

The melted resin goes through the through portions 61 formed in the first region A1 of the partitioning portion 6 by being pushed by the following melted resin and enters a gap (that is, a groove portion of the first portion 53a of the kneading portion 53 of the screw 5) between the first portion 53a of the kneading portion 53 of the screw 5 and the partitioning portion 6. Accordingly, the melted resin is rapidly accelerated when the melted resin flows into the through portions 61 of the partitioning portion 6 because the flow passage cross-sectional area rapidly shrinks. Further, the melted resin is rapidly decelerated when the melted resin flows out from the through portions 61 of the partitioning portion 6 because the flow passage cross-sectional area is rapidly enlarged. As a result, the stretching activity is imparted to the melted resin.

In this case, the end portion, on the Y-axis positive side, of the cavity portion 21 of the cylinder 2 on the Y-axis positive side functions as the guiding portion (second guiding portion) which guides the melted resin from the cavity portion 21 of the cylinder 2 on the Y-axis positive side to the through portions 61 formed in the first region A1 of the partitioning portion 6.

Further, the through portion 61 formed in the first region A1 of the partitioning portion 6 functions as a flow-in hole which causes the melted resin to flow from the cavity portion 21 of the cylinder 2 on the Y-axis positive side into the gap between the first portion 53a of the kneading portion 53 of the screw 5 and the partitioning portion 6.

The melted resin is thereafter conveyed to the Y-axis positive side by the first portion 53a of the kneading portion 53 of the screw 5 and is discharged as the composite material from the discharge opening 41 of the discharge portion 4. In this case, the gap between the first portion 53a of the kneading portion 53 of the screw 5 and the partitioning portion 6 forms the flow passage (first flow passage) through which the melted resin goes. Thus, in the present embodiment, the first flow passage is divided by the partition wall portion 54 of the screw 5.

As described above, in the extrusion apparatus 1 and a method for producing a composite material according to the present embodiment, the resin raw material is caused to flow between the first flow passage and the second flow passage via the through portions 61 of the partitioning portion 6, and not only the sheering activity but also the stretching activity is thereby imparted to the resin raw material.

In this case, because the second flow passage is formed between the cylinder 2 and the partitioning portion 6 and can secure a large space compared to flow passages of Patent Literatures 1 and 2, the second flow passage can be inhibited from being clogged with the resin raw material. Thus, the extrusion apparatus 1 and the method for producing a composite material according to the present embodiment can impart the stretching activity to the resin raw material while inhibiting clogging with the resin raw material.

In addition, in the extrusion apparatus 1 and the method for producing a composite material according to the present embodiment, because the end portion of the cavity portion 21 of the cylinder 2 and the partition wall portions 54 of the screw 5 can be caused to function as the guiding portions for the resin raw material, the resin raw material can satisfactorily be guided to the through portions 61 of the partitioning portion 6.

In particular, in a case where the second portion 53b and the third portion 53c are formed such that the depths of the groove portions of the second portion 53b and the third portion 53c of the kneading portion 53 of the screw 5 become shallower toward the Y-axis positive side, the resin raw material can satisfactorily be guided to the through portions 61 of the partitioning portion 6. Thus, the through portions 61 of the partitioning portion 6 can be inhibited from being clogged with the resin raw material.

Further, in a case where the flight angle θ1 of the flight 51b of the kneading portion 53 of the screw 5 is small relatively to the flight angle θ2 of the flight 51a of the conveying portion 52 of the screw 5, while the conveying force on the resin raw material to the Y-axis positive side in the kneading portion 53 is weakened compared to that in the conveying portion 52 of the screw 5, the flow of the resin raw material to the X-axis positive side and the Z-axis positive side can be promoted. Thus, the resin raw material is pressurized and can thereby strongly be pushed into the cavity portion 21 of the cylinder 2. Accordingly, the through portions 61 of the partitioning portion 6 and the second flow passage can be inhibited from being clogged with the melted resin.

Next, a description will be made about comparison results of a dispersion test result of a composite material, which was obtained by kneading the resin raw material by using a common two-axis extrusion apparatus, and a dispersion test result of a composite material, which was obtained by kneading the resin raw material by using the extrusion apparatus 1 of the present embodiment.

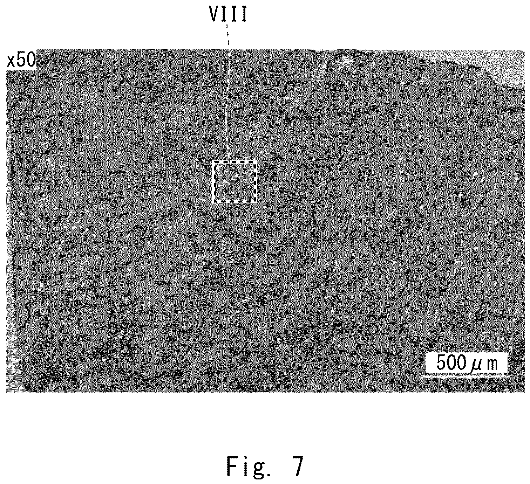

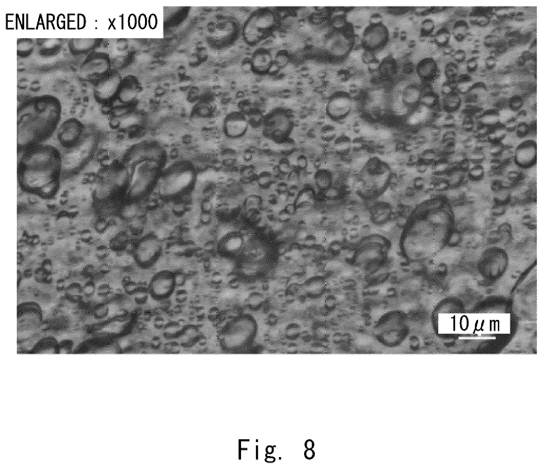

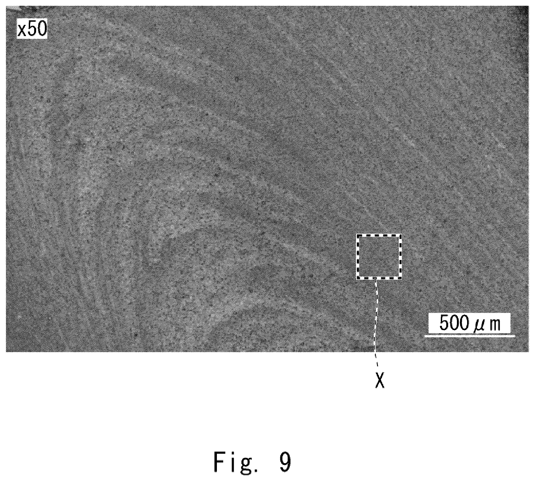

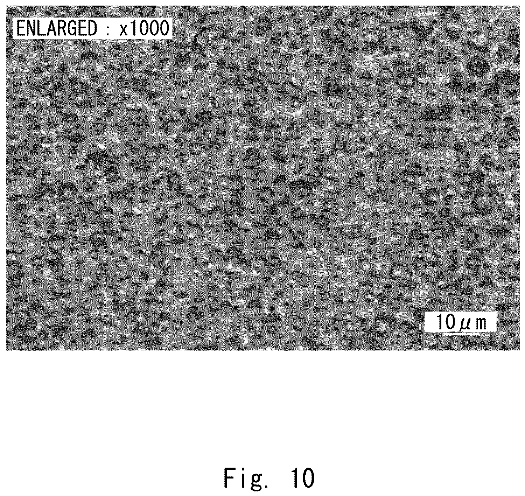

Fig. 7 is a diagram illustrating the dispersion test result of the composite material which was obtained by kneading the resin raw material by using the common two-axis extrusion apparatus. Fig. 8 is an enlarged view of an VIII section in Fig. 7. Fig. 9 is a diagram illustrating the dispersion test result of the composite material which was obtained by kneading the resin raw material by using the extrusion apparatus of the present embodiment. Fig. 10 is an enlarged view of an X section in Fig. 9.

Here, as for the common two-axis extrusion apparatus, the dispersion test result of a composite material was acquired, the composite material being obtained by kneading polypropylene (80%) and an ethylene-vinylalcohol resin (20%) by rotating a screw with a barrel diameter of 32 mm at 500 rpm.

Further, as for the extrusion apparatus 1 of the present embodiment, the dispersion test result of a composite material was acquired, the composite material being obtained by kneading polypropylene (80%) and the ethylene-vinylalcohol resin (20%) by rotating the screw 5 with a barrel diameter of 35 mm at 1,300 rpm.

As illustrated in Fig. 7 and Fig. 8, as for the composite material which was obtained by kneading the resin raw material by using the common two-axis extrusion apparatus, the average dispersion diameter of the ethylene-vinylalcohol resin was 9.53 µm; however, as illustrated in Fig. 9 and Fig. 10, as for the composite material which was obtained by kneading the resin raw material by using the extrusion apparatus 1 of the present embodiment, the average dispersion diameter of the ethylene-vinylalcohol resin was 2.73 µm.

Accordingly, it can be understood that the extrusion apparatus 1 of the present embodiment can exhibit high kneading performance compared to the common two-axis extrusion apparatus. In particular, as for the above-described resin raw material, fine kneading is difficult unless the stretching activity is imparted, but because the extrusion apparatus 1 of the present embodiment was able to realize fine kneading compared to the common two-axis extrusion apparatus, it can be understood that the stretching activity can satisfactorily be imparted to the composite material.

Next, a description will be made about comparison results of mechanical strength of a test specimen, which was shaped from the composite material obtained by kneading the resin raw material by using the common two-axis extrusion apparatus, and mechanical strength of a test specimen, which was shaped from the composite material obtained by kneading the resin raw material by using the extrusion apparatus 1 of the present embodiment.

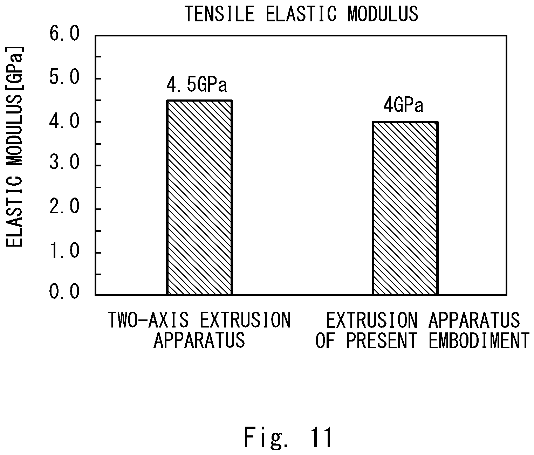

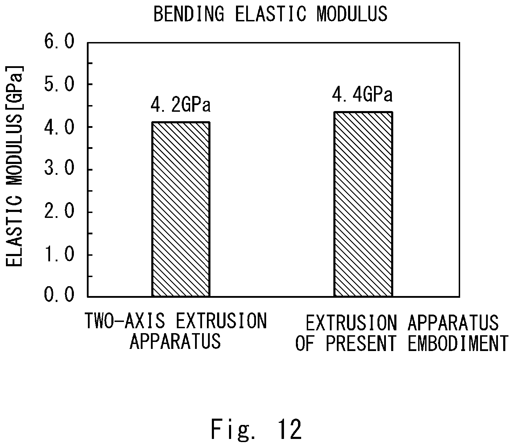

Fig. 11 is a diagram illustrating tensile elastic moduli of the test specimen, which was shaped from the composite material obtained by kneading the resin raw material by using the common two-axis extrusion apparatus, and the test specimen, which was shaped from the resin raw material kneaded by using the extrusion apparatus of the present embodiment. Fig. 12 is a diagram illustrating bending elastic moduli of the test specimen, which was shaped from the resin raw material kneaded by using the common two-axis extrusion apparatus, and the test specimen, which was shaped from the resin raw material kneaded by using the extrusion apparatus of the present embodiment.

As for the common two-axis extrusion apparatus, the length of glass fiber of a composite material was acquired, the composite material being obtained by kneading polypropylene (70%) and the glass fiber (30%) as the resin raw materials by rotating the screw with a barrel diameter of 32 mm at 500 rpm, and the tensile elastic modulus and the bending elastic modulus of the test specimen shaped from the composite material were acquired.

Further, as for the extrusion apparatus 1 of the present embodiment, the length of glass fiber of a composite material was acquired, the composite material being obtained by kneading polypropylene (70%) and the glass fiber (30%) as the resin raw materials by rotating the screw 5 with a barrel diameter of 35 mm at 1,300 rpm, and the tensile elastic modulus and the bending elastic modulus of the test specimen shaped from the composite material were acquired.

The average fiber length of the glass fiber of the composite material, which was obtained by performing kneading by using the common two-axis extrusion apparatus, was 0.51 mm. In this case, the standard deviation of the fiber length of the glass fiber of the composite material was 0.34 mm.

On the other hand, the average fiber length of the glass fiber of the composite material, which was obtained by performing kneading by using the extrusion apparatus of the present embodiment, was 0.36 mm. In this case, the standard deviation of the fiber length of the glass fiber of the composite material was 0.24 mm.

As illustrated in Fig. 11, the tensile elastic modulus of the test specimen of the composite material obtained by using the extrusion apparatus 1 of the present embodiment is low compared to the tensile elastic modulus of the test specimen of the composite material obtained by using the common two-axis extrusion apparatus, but a lowering rate of the tensile elastic modulus remained at 11%.

On the other hand, as for the bending elastic modulus of the test specimen of the composite material obtained by using the extrusion apparatus 1 of the present embodiment, as illustrated in Fig. 12, the length of the glass fiber of the composite material obtained by using the extrusion apparatus 1 is short compared to the length of the glass fiber of the composite material obtained by using the common two-axis extrusion apparatus, but a result was obtained that the bending elastic modulus of the test specimen of the composite material obtained by using the extrusion apparatus 1 is 5% high compared to the bending elastic modulus of the test specimen of the composite material obtained by using the common two-axis extrusion apparatus.

Based on such results, the relationship between the bending elastic modulus of the test specimen of the composite material obtained by using the extrusion apparatus 1 of the present embodiment and the bending elastic modulus of the test specimen of the composite material obtained by using the common two-axis extrusion apparatus is inverse to the relationship between the length of the glass fiber of the composite material obtained by using the extrusion apparatus 1 and the length of the glass fiber of the composite material obtained by using the common two-axis extrusion apparatus; however, it is considered that high dispersibility of the fiber itself contributes to an improvement in bending strength more than the fiber length of the glass fiber of the composite material does. In other words, it can be under stood that when fine dispersion of the glass fiber can be realized in the resin raw material even when the glass fiber is fractured and becomes short due to kneading, an improvement in mechanical strength can be expected, and in a case where the extrusion apparatus 1 of the present embodiment is used, an improvement in the mechanical strength can be realized.

Consequently, for example, when a composite material is again obtained by using resin pieces whose glass fiber becomes short when a resin product is pulverized for recycle, in a case where the extrusion apparatus 1 of the present embodiment is used, a recycled product with high mechanical strength can be obtained.

The present disclosure is not limited to the above embodiment but can appropriately be changed without departing from the scope of the gist thereof.

The extrusion apparatus 1 of the above embodiment is configured as a single-axis extrusion apparatus but may be configured as an extrusion apparatus which includes a plurality of screws.

The extrusion apparatus 1 of the above embodiment includes two cavity portions 21 but may have a single cavity portion 21 or may have three or more cavity portions 21. In this case, the number of cavity portions 21 may be set taking into consideration the stretching activity to be imparted to the resin raw material, variation which occurs to the resin raw material due to a temperature rise of the resin raw material when the resin raw material moves between the first flow passage and the second flow passage, and so forth. Further, in accordance with the number of cavity portions 21, arrangement of the partition wall portions of the cylinder 2 and the screw 5 and arrangement of the through portions 61 of the partitioning portion 6 may appropriately be changed.

In the above embodiment, the cavity portions 21 are formed in an inner peripheral surface of the cylinder 2, but for example, the cylinder 2 is formed to have a generally equivalent inner diameter, a recessed portion is formed in an outer peripheral surface of the partitioning portion 6, and the cavity portion may thereby be formed between the cylinder 2 and the partitioning portion 6. Further, the cavity portion is not limited to a generally cylindrical shape and may be a groove portion or the like which extends in the Y-axis direction.

In the above embodiment, the partitioning portion 6 having a cylindrical shape is used, but it is sufficient that the partitioning portion 6 has a shape which can partition the first flow passage from the second flow passage, and the partitioning portion 6 can appropriately be changed in accordance with a shape or the like of the cavity portion, for example. Further, the through portion 61 of the partitioning portion 6 is not limited to a circular shape and may have a polygonal shape, an elliptic shape, or the like.

The present application claims priority based on Japanese Patent Application No. 2022-20225, filed on February 14, 2022, the entirety of which is incorporated herein by reference.

### Reference Signs List

- 1: EXTRUSION APPARATUS
- 2: CYLINDER
- 23: FIRST PORTION
- 24: SECOND PORTION
- 25: THIRD PORTION
- 21: CAVITY PORTION
- 22: PARTITION WALL PORTION
- 26: LID PORTION
- 26a: ENGAGED PORTION
- 3: HOPPER
- 4: DISCHARGE PORTION
- 41: DISCHARGE OPENING
- 5: SCREW
- 51: FLIGHT
- 51a: FLIGHT OF CONVEYING PORTION
- 51b: FLIGHT OF KNEADING PORTION
- 52: CONVEYING PORTION
- 53: KNEADING PORTION
- 53a: FIRST PORTION
- 53b: SECOND PORTION
- 53c: THIRD PORTION
- 54: PARTITION WALL PORTION
- θ1: FLIGHT ANGLE OF FLIGHT OF KNEADING PORTION OF SCREW
- θ2: FLIGHT ANGLE OF FLIGHT OF CONVEYING PORTION OF SCREW
- 6: PARTITIONING PORTION
- A1: FIRST REGION
- A2: SECOND REGION
- A3: THIRD REGION
- A4: FOURTH REGION
- 61: THROUGH PORTION
- 62: ENGAGING PORTION
- 7: DRIVING PORTION
- 8: HEATING PORTION

## Claims

1. An extrusion apparatus comprising:
a cylinder to which a resin raw material is supplied from a hopper;
a discharge portion which is provided in an end portion of the cylinder and discharges the resin raw material which has been kneaded;
a screw which is rotatably inserted in an internal portion of the cylinder, kneads the resin raw material, and conveys the resin raw material to a side of the discharge portion;
a partitioning portion which is arranged between the cylinder and the screw and in which a through portion through which the resin raw material goes is formed;
a first flow passage which is formed between the screw and the partitioning portion and through which the resin raw material goes; and
a second flow passage which is formed between the cylinder and the partitioning portion and through which the resin raw material goes.

2. The extrusion apparatus according to claim 1, comprising a first guiding portion which guides the resin raw material from the first flow passage to the through portion of the partitioning portion.

3. The extrusion apparatus according to claim 1 or 2, comprising a second guiding portion which guides the resin raw material from the second flow passage to the through portion of the partitioning portion.

4. The extrusion apparatus according to any one of claims 1 to 3, wherein
the screw includes a conveying portion which conveys the resin raw material and a kneading portion which is arranged on a side of the discharge portion relative to the conveying portion and kneads the resin raw material, and
the partitioning portion is arranged in a position corresponding to the kneading portion of the screw.

5. The extrusion apparatus according to claim 4, wherein a flight angle of the kneading portion in the screw is small relatively to a flight angle of the conveying portion in the screw.

6. The extrusion apparatus according to any one of claims 1 to 5, wherein the partitioning portion has a cylindrical shape, which covers the screw, and includes a plurality of holes as the through portion.

7. The extrusion apparatus according to claim 6, wherein the partitioning portion is fixed to the cylinder.

8. The extrusion apparatus according to claim 6 or 7, wherein the partitioning portion includes a plurality of flow-out holes which cause the resin raw material to flow out from the first flow passage to the second flow passage and a plurality of flow-in holes which cause the resin raw material to flow from the second flow passage into the first flow passage.

9. The extrusion apparatus according to claim 8, comprising a first partition wall portion that divides the first flow passage between the flow-out holes and the flow-in holes which are arranged on a side of the discharge portion relative to the flow-out holes in an axis direction of the screw,
wherein the first flow passage is arranged such that the second flow passage is interposed in the first flow passage.

10. The extrusion apparatus according to claim 9, wherein
the screw includes a conveying portion which conveys the resin raw material, a kneading portion which is arranged on a side of the discharge portion relative to the conveying portion and kneads the resin raw material, and the first partition wall portion, and
a depth of a groove portion of a portion on a side of the first partition wall portion in the kneading portion becomes shallower toward the side of the first partition wall portion.

11. The extrusion apparatus according to any one of claims 8 to 10, comprising a second partition wall portion that divides the second flow passage between the flow-in holes and the flow-out holes which are arranged on a side of the discharge portion relative to the flow-in holes in an axis direction of the cylinder,
wherein the second flow passage is arranged such that the first flow passage is interposed in the second flow passage.

12. The extrusion apparatus according to any one of claims 1 to 11, wherein the second flow passage is a recess portion which is formed in an inner peripheral surface of the cylinder.

13. A method for producing a resin composition, the method comprising:
a step of conveying a resin raw material, which is supplied to an internal portion of a cylinder, to a side of a discharge portion by a screw;
a step of causing the resin raw material to enter a first flow passage, which is formed between the screw and a partitioning portion, via a through portion of the partitioning portion, which is arranged between the cylinder and the screw, and of causing the resin raw material to flow in the first flow passage; and
a step of causing the resin raw material to enter a second flow passage, which is formed between the cylinder and the partitioning portion, via the through portion of the partitioning portion and of causing the resin raw material to flow in the second flow passage,
wherein the resin raw material is accelerated when the resin raw material goes through the through portion of the partitioning portion.
